# EUROPEAN PATENT APPLICATION

(11) **EP 4 765 421 A1**
(43) Date of publication of application: **24.06.2026**
(21) Application number: 25830908.7
(22) Date of filing: 15.05.2025
(51) Int. Cl.: H01M 50/367, H01M 50/383, H01M 50/503, H01M 10/04, H01M 50/211, H01M 50/249

(54) **BATTERY MODULE, AND BATTERY PACK AND VEHICLE INCLUDING SAME**

(30) Priority: 19.06.2024 KR 20240079828
(71) Applicant: LG Energy Solution, Ltd., Seoul 07335 (KR)
(72) Inventor: PARK, Ju-Hun, Daejeon 34122 (KR); KIM, Soo-Youl, Daejeon 34122 (KR); PARK, Gi-Chan, Daejeon 34122 (KR)
(74) Representative: BCKIP Part mbB
(86) International application number: PCT/KR2025/006618
(87) International publication number: WO 2025/263847

(57) **Abstract**

Disclosed is a battery module, which includes a cell assembly having a plurality of battery cells; a module case configured to accommodate the cell assembly and having a gas venting hole provided at one side to allow gas generated from the battery cell to be discharged to the outside; a module terminal electrically connected to the cell assembly and exposed to the other side of the module case; a fireproof cover member configured to cover a top end of the cell assembly to suppress upward discharge of the gas from the battery cell; and a block member configured to partition a space between the cell assembly and one side of the module case to guide the gas toward the gas venting hole.

## Description

### TECHNICAL FIELD

The present disclosure relates to a battery module, and more specifically, to a battery module for discharging gas or flame in a specific direction when battery cells are ignited, and a battery pack and vehicle including the same.

The present application claims priority to Korean Patent Application No. 10-2024-0079828 filed on June 19, 2024 in the Republic of Korea, the disclosures of which are incorporated herein by reference.

### BACKGROUND ART

Secondary batteries, which have high applicability according to product group and electrical characteristics such as high energy density, are widely used not only in portable devices but also in electric vehicles (EVs) or hybrid electric vehicles (HEVs) driven by electric power sources. These secondary batteries are attracting attention as a new energy source for environmental friendliness and energy efficiency enhancement, not only because they may drastically reduce the use of fossil fuels, but also because they do not generate any by-products from energy use.

Types of secondary batteries widely used at present include lithium ion batteries, lithium polymer batteries, nickel cadmium batteries, nickel hydrogen batteries, and nickel zinc batteries. When a high output voltage is required, a plurality of battery cells are connected in series to form a battery module or a battery pack. In addition, a plurality of battery cells are connected in parallel to form a battery module or a battery pack in order to increase the charge/discharge capacity. Therefore, the number of battery cells included in the battery module or battery pack may be set variously depending on the required output voltage or charge/discharge capacity.

In general, the operating voltage of a secondary battery is approximately 2.5 V to 4.5 V. Therefore, for example, in an electric vehicle, a battery module is configured by connecting a plurality of secondary batteries in series and/or in parallel, and a battery pack is configured by connecting a plurality of battery modules in series and/or in parallel, and the battery pack is used as an energy source.

Meanwhile, recently, the battery pack has very high energy densities because a large number of battery modules are densely accommodated within a limited internal space. If a fire occurs in any one of these battery modules, gas and flame may propagate to the surrounding area, potentially triggering a chain reaction of fires in adjacent battery modules. Therefore, in the art, a method to delay or minimize the propagation of thermal energy between battery modules within a battery pack is recognized and researched as a critical issue in preparation for battery module ignition. For example, if the direction of gas or flame emitted from a battery module in the event of an ignition can be controlled, it would be easier to design a battery pack that minimizes the impact of gas or flame on battery modules. Therefore, there is a need to develop a battery module that may guide gas or flame in a specific direction and safely discharge the gas or flame when an ignition occurs within a battery module.

### DISCLOSURE

### Technical Problem

The present disclosure is designed to solve the problems of the related art, and therefore the present disclosure is directed to providing a battery module with a directional vent structure that may stably discharge gas or flame in a specific direction when a battery cell ignites.

The present disclosure is also directed to providing a battery pack and a vehicle including the battery module.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a cell assembly having a plurality of battery cells; a module case configured to accommodate the cell assembly and having a gas venting hole provided at one side to allow gas generated from the battery cell to be discharged to the outside; a module terminal electrically connected to the cell assembly and exposed to the other side of the module case; a fireproof cover member configured to cover a top end of the cell assembly to suppress upward discharge of the gas from the battery cell; and a block member configured to partition a space between the cell assembly and one side of the module case to guide the gas toward the gas venting hole.

The fireproof cover member and the block member may be formed as one piece.

The block member may be bent and extended from one end of the fireproof cover member.

The fireproof cover member may be made of compressible material to fill a space between the top end of the cell assembly and an upper surface of the module case.

The battery module may further comprise a bus bar connected to electrode leads respectively provided to the plurality of battery cells; and a bus bar frame provided to support the bus bar and cover a front side or a rear side of the cell assembly.

The bus bar frame covering the rear side of the cell assembly may face one side of the module case and have a plurality of through holes through which the gas passes.

The block member may be provided at an outer side of the bus bar frame and may be configured to block gas passing through the through hole from moving in a direction in which the battery cells are stacked in a space between the bus bar frame and one side of the module case.

The block member may be provided in plurality so that the plurality of block members are arranged to be spaced apart along a direction in which the battery cells are stacked.

The block member may be configured to be elongated in a height direction of the bus bar frame.

The block member may be provided to be coupled by fitting to a block coupling portion formed to protrude from the bus bar frame.

The battery module may further comprise a vent blocking block disposed in a space between the cell assembly and the bus bar frame, the battery cell may be a pouch-type battery cell, and the vent blocking block may be provided on at least one side of a cell terrace from which the electrode leads are drawn out of the battery cell.

The vent blocking block may be configured to pressurize a side surface of the cell terrace.

The vent blocking block may be provided in plurality at a front side and a rear side of the cell assembly, respectively, the cell terraces of the plurality of battery cells located at the front side of the cell assembly may be all compressed by the vent blocking block, and some of the cell terraces of the plurality of battery cells located at the rear side of the cell assembly may be compressed by the vent blocking block.

In another aspect of the present disclosure, there is provided a battery pack comprising the battery module described above.

In still another aspect of the present disclosure, there is provided a vehicle comprising the battery pack described above.

### Advantageous Effects

According to one aspect of the present disclosure, a battery module having a directional vent structure that may stably discharge gas or flame in a specific direction when a battery cell ignites may be provided.

According to another aspect of the present disclosure, the safety of the battery module may be secured by allowing gas, flame, etc. generated from the battery cell to be discharged to the rear side of the battery module where the module terminal is not provided.

According to still another aspect of the present disclosure, heat transfer at the top end of the battery cells may be suppressed by a fireproof cover member placed in the space between the top end of the battery cells and the upper surface of the module case.

According to still another aspect of the present disclosure, the gas venting path is partitioned by a block member disposed on the inner side of one side of the module case having a gas venting hole. In this case, the lateral movement of gas is blocked and restricted by the block member, and the forward and backward movement of gas may be promoted. Accordingly, directional venting of gas may be smoothly achieved, and heat trapped within the battery module may be significantly reduced.

The effects of the present disclosure are not limited to the above effects, and effects not mentioned herein may be clearly understood by a person having ordinary skill in the art from this specification and the attached drawings.

### DESCRIPTION OF DRAWINGS

FIG. 1 is a front perspective view showing a battery module according to an embodiment of the present disclosure.
FIG. 2 is a rear perspective view showing a battery module according to an embodiment of the present disclosure.
FIG. 3 is an exploded perspective view showing the battery module of FIG. 2.
FIG. 4 is a side view showing a battery cell included in the battery module of FIG. 2.
FIG. 5 is a rear cross-sectional view showing the battery module taken along line I-I' of FIG. 2.
FIG. 6 is a front view showing a rear end cover of the module case according to an embodiment of the present disclosure.
FIG. 7 is a front view showing a rear bus bar frame according to an embodiment of the present disclosure.
FIGS. 8 to 10 are process diagrams showing the processes before and after assembling of the fireproof cover member and the block member of the battery module according to an embodiment of the present disclosure.
FIG. 11 is a front view showing the rear side of the battery module with the rear end cover of FIG. 2 removed.
FIG. 12 is a sectioned perspective view showing the battery module illustrated in FIG. 10.
FIG. 13 is a sectioned perspective view showing the battery module with the rear end cover attached in FIG. 12.
FIG. 14 is an enlarged cross-sectional view showing a portion of FIG. 13.
FIG. 15 is a rear internal perspective view showing a battery module to which a vent blocking member according to an embodiment of the present disclosure is applied.
FIG. 16 is a front internal perspective view showing a battery module to which the vent blocking member according to an embodiment of the present disclosure is applied.
FIG. 17 is a front cross-sectional view showing a battery module to which the vent blocking member according to an embodiment of the present disclosure is applied.
FIG. 18 is a schematic perspective view showing a battery pack including the battery module according to an embodiment of the present disclosure.
FIG. 19 is a schematic perspective view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure includes various embodiments. For each embodiment, redundant descriptions of substantially identical or similar components will be omitted, and the differences will be described.

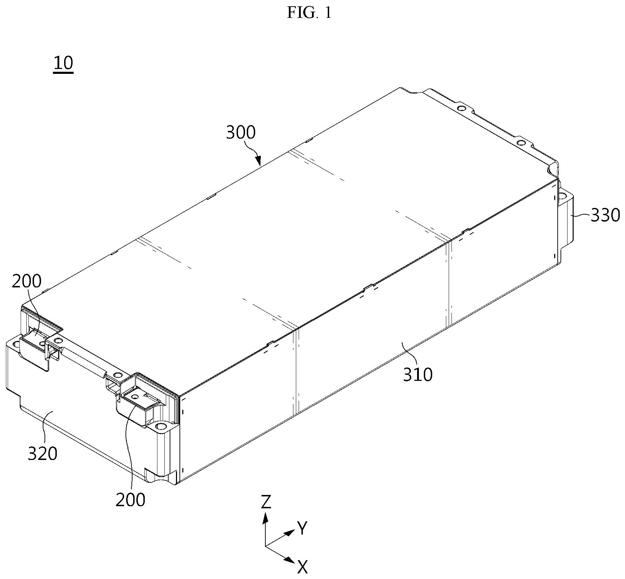

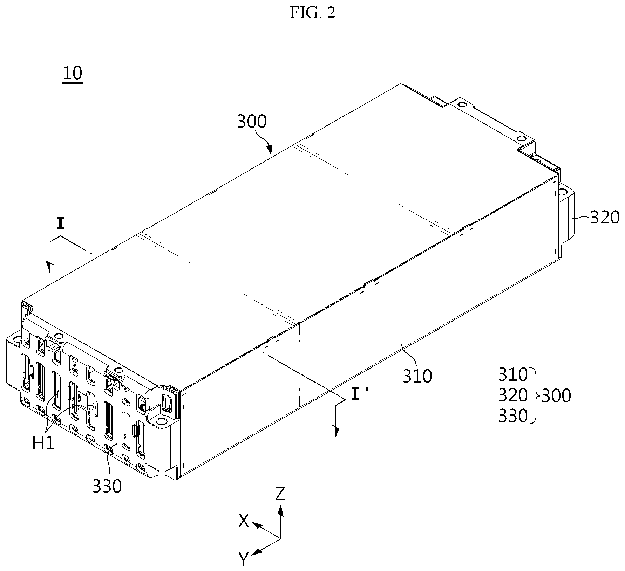

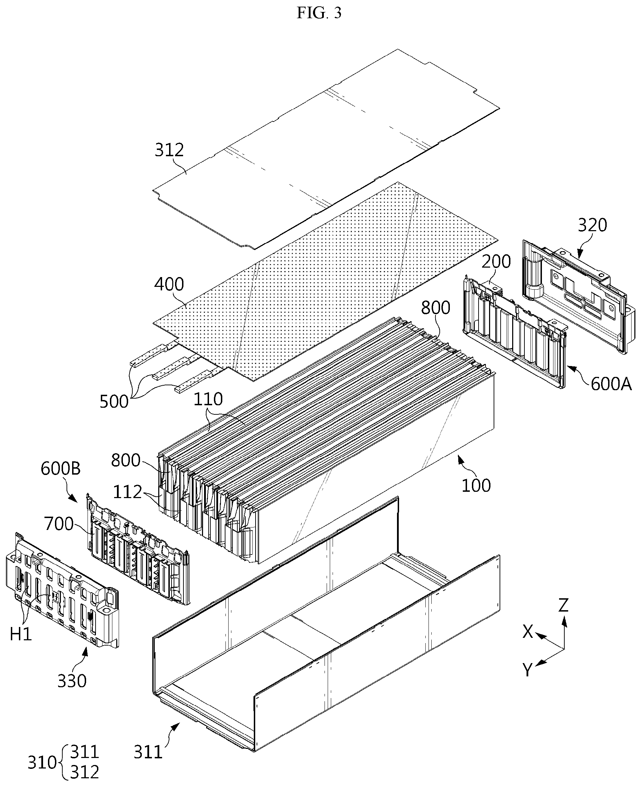

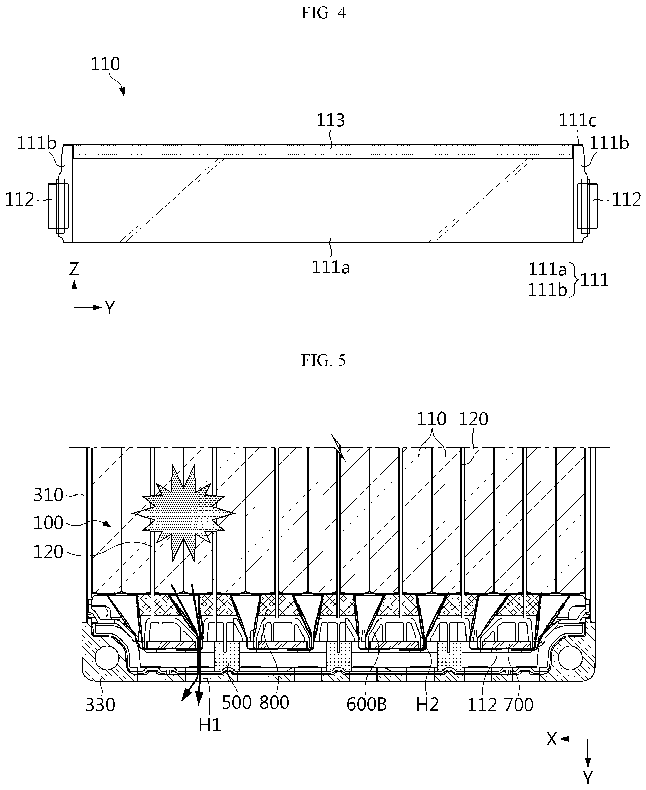

FIG. 1 is a front perspective view showing a battery module according to an embodiment of the present disclosure, FIG. 2 is a rear perspective view showing a battery module according to an embodiment of the present disclosure, FIG. 3 is an exploded perspective view showing the battery module of FIG. 2, FIG. 4 is a side view showing a battery cell included in the battery module of FIG. 2, and FIG. 5 is a rear cross-sectional view showing the battery module taken along line I-I' of FIG. 2.

Referring to FIGS. 1 to 5, a battery module 10 according to an embodiment of the present disclosure includes a cell assembly 100, a module terminal 200, a module case 300, a fireproof cover member 400, and a block member 500.

The battery module 10 according to the present disclosure is configured to allow directional venting of gas or flame generated from the battery cell 110 in a specific direction when a thermal event occurs. For example, the battery module 10 according to an embodiment of the present disclosure is configured such that, when an internal fire occurs, the front side of the battery module 10 has a sealed structure as shown in FIG. 1, and a gas venting hole H1 is provided at the rear side of battery module 10 as shown in FIG. 2 to discharge the gas or flame to the rear side of the battery module 10.

As will be described later, when mounting a plurality of battery modules 10 in the pack case 2, in many cases, the front side of the battery module 10 at which the module terminal 200 is located is arranged toward the center of the pack case 2 in order to simplify the electrical connection between the battery modules 10. In this case, if gas or flame is discharged to the front side of the battery module 10 when a certain battery module 10 ignites, heat may accumulate in the center of the pack case, increasing the risk of a chain ignition of the battery modules 10. In addition, if gas or flame is discharged to the front side of the battery module 10, it may not be easy to secure a gas discharge path within the battery pack.

Accordingly, the battery module 10 according to an embodiment of the present disclosure is configured such that gas or flame is discharged to the rear side of the battery module 10 opposite to the front side of the battery module 10 where the module terminal 200 is located. Hereinafter, the main configuration of the battery module 10 according to an embodiment of the present disclosure will be described in detail.

Referring to FIG. 3, the cell assembly 100 may mean an assembly of a plurality of battery cells 110. Here, the battery cell 110 may be a pouch-type battery cell 110.

The pouch-type battery cell 110 may include an electrode assembly and a pouch case 111 that accommodates the electrode assembly. The pouch case 111 may include an accommodation portion 111a and a sealing portion. The accommodation portion 111a is a portion in which the electrode assembly is accommodated, and the sealing portion refers to a portion that is thermally fused and sealed at the outer periphery of the accommodation portion 111a.

For example, as shown in FIG. 4, a sealing portion may be provided on three of the four side surfaces of the pouch case 111. The sealing portion may include two cell terraces 111b and one side edge 111c.

Here, the two cell terraces 111b refer to a front sealing portion and a rear sealing portion of the pouch case. The electrode lead 112 may be configured such that one end is connected to the electrode assembly inside the pouch case 111 and is extended to the outside of the cell terrace 111b.

The side edge 111c refers to an upper sealing portion in the pouch case 111b of FIG. 4. The side edge 111c may be folded at least once. A sealing tape 113 may be attached to the side edge 111c. The sealing tape 113 may be attached to the side edge 111c in a form that wraps the side edge 111c in the thickness direction of the battery cell 110. In addition, the sealing tape 113 may be configured to be elongated along the longitudinal direction of the battery cell 110. The length of the sealing tape 113 may be configured to extend as long as the length of the battery cell 110. The sealing tape 113 may be configured to completely cover the side edge 111c of the battery cell 110 in the longitudinal direction.

In this case, when gas is generated inside the battery cell 110 and the internal pressure increases, the side edge 111c is less likely to be opened, and the gas may be prevented from being discharged in the upper direction of the battery cell 110.

The plurality of pouch-type battery cells 110 may be stacked in the right and left direction (X-axis direction) such that the side surface without the sealing portion faces downward and the wide surfaces face each other. The lower surface of the pouch case 111 without the sealing portion may be in contact with the bottom surface of the module case 300. Heat of the battery cells 110 may be dissipated to the module case through heat exchange between the lower surface of the pouch case 111 and the bottom surface of the module case 300. At this time, a thermally conductive resin (not shown) may be disposed between the lower surface of the pouch case 111 and the bottom surface of the module case 300. The thermally conductive resin may employ a material having adhesiveness and high thermal conductivity.

Meanwhile, the present disclosure is not limited by a specific type or shape of the battery cell 110, and various battery cells 110 known at the time of filing of this application may be employed. In this embodiment, a pouch-type secondary battery is employed as shown in the drawings, but a cylindrical or rectangular secondary battery may also be employed as the battery cell 110.

The cell assembly 100 according to this embodiment may include a barrier member 120. The barrier member 120 may be provided in a plate shape having a thinner thickness than the battery cell 110. For example, the barrier member 120 may be provided in a pad shape having excellent heat resistance and/or fire resistance and compressibility. A material such as silicone or aerogel may be employed as the material of the barrier member 120.

The barrier member 120 may be provided in plurality, and the plurality of barrier members 120 may be arranged with a predetermined number of battery cells 110 interposed therebetween along the direction in which the battery cells 110 are arranged. In particular, the barrier member 120 may be configured to partition the battery cells 110 into a predetermined number of battery cells.

According to this embodiment of the present disclosure, when thermal runaway occurs at the battery cell 110, the propagation of flame or heat may be blocked by the barrier member 120. In addition, the battery member may contribute to suppressing structural deformation of the module case 300 by absorbing the expansion force of the battery cell 110 when swelling occurs at the battery cell 110.

The module terminal 200 may be configured to be electrically connected to the plurality of battery cells 110. Also, the module terminal 200 may be configured to be exposed to the other side of the module case 300. For example, the module terminal may be configured such that one side is connected to the electrode lead 112 of the battery cell 110 inside the module case 300 and the other side is exposed to the outside of the front end cover 320, explained later, to function as a positive terminal or a negative terminal of the battery module 10.

The module case 300 may be configured to accommodate the cell assembly 100. Specifically, the module case 300 may have an inner space capable of accommodating the cell assembly 100 and may be made of a material having excellent mechanical strength and heat resistance so as to physically or chemically protect the cell assembly 100 accommodated in the inner space.

In particular, the module case 300 may have a gas venting hole H1 at one side so that gas or flame generated from the battery cell 110 may be discharged to the outside.

In this embodiment, one side of the module case 300 may mean a rear side of the module case 300, and the other side of the module case 300 may mean a front side of the module case 300. That is, the module terminal 200 and the gas venting hole H1, explained above, may be provided at opposite sides. For example, as shown in FIGS. 1 and 2, the module terminal 200 may be provided at the front side of the module case 300, and the gas venting hole H1 may be provided at the rear side of the module case 300.

In this case, when thermal runaway occurs in the battery module 10, gas or flame generated inside battery module 10 may be discharged to the rear side of the module case 300. At this time, it is preferable to seal the remaining part of the module case 300 except for the gas venting hole.

More specifically, referring to FIGS. 1 to 3, the module case 300 may include a case body 310, a front end cover 320, and a rear end cover 330.

The case body 310 may include a U-frame 311 and a top plate 312. The U-frame 311 may include a pair of side plates that cover the left and right sides of the cell assembly 100, and a base plate that covers the lower surface of the cell assembly 100. The pair of side plates and the base plate may be formed as one piece.

The top plate 312 may be configured to cover the upper surface of the cell assembly 100. The top plate 312 may be coupled to the U-frame 311 by welding. The case body 310 may be formed in a rectangular tubular shape with open front and rear sides. As an alternative to this embodiment, a module case 300 in the form of a mono frame in which the U-frame 311 and the top plate 312 are integrated may be employed.

The front end cover 320 and the rear end cover 330 may be respectively coupled to the open front and rear surfaces of the case body 310. The front end cover 320 and the rear end cover 330 may be coupled to the case body 310 by welding or a snap-fit structure.

The front end cover 320 has a slit for drawing the module terminal 200 from the inside to the outside of the module case. The periphery of the slit through which the module terminal 200 passes may be sealed. The rear end cover 330 has a plurality of gas venting holes H1. In addition, the front end cover 320 and the rear end cover 330 may have an inner side made of an insulating material and an outer side made of a metal material.

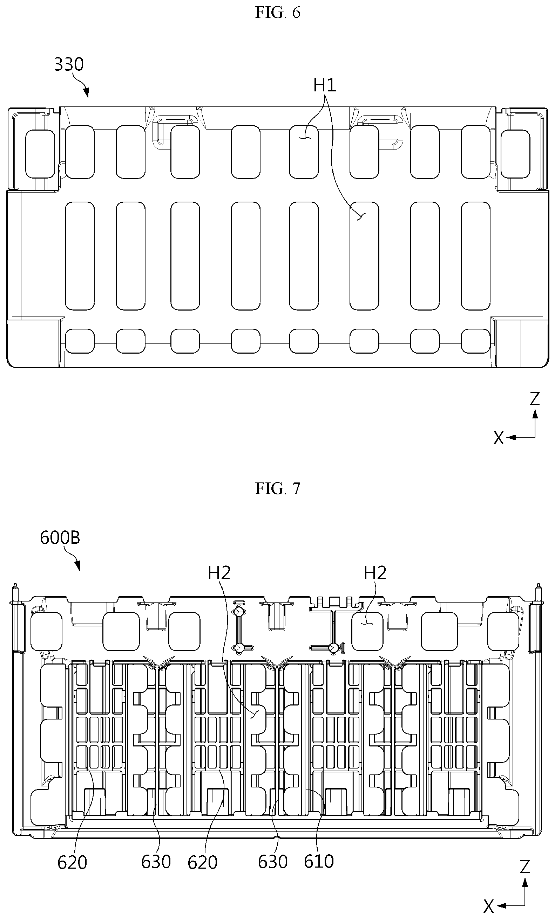

FIG. 6 is a front view showing a rear end cover of the module case according to an embodiment of the present disclosure.

Referring to FIG. 6, the gas venting hole H1 may be provided in plurality in the rear end cover 330. The gas venting holes H1 may be arranged in at least one direction. The gas venting holes H1 may be arranged along a plurality of rows. For example, as shown in FIG. 6, the gas venting holes H1 are arranged in a row along the height direction of the rear end cover 330, and the plurality of gas venting holes H1 arranged in a row may be arranged in a plurality of rows along the stacking direction of the battery cell 110, namely the width direction of the rear end cover 330. The plurality of gas venting holes H1 may be provided at regular intervals from each other.

According to this embodiment of the present disclosure, even if a thermal event occurs in any one of the battery cells 110, the venting gas or flame may be smoothly discharged to the outside of the module case 300 through the gas venting holes H1.

FIG. 7 is a front view showing a rear bus bar frame according to an embodiment of the present disclosure.

Referring to FIG. 7 along with FIG. 3, the battery module 10 of the present disclosure may further include a bus bar frame 600A, 600B. The bus bar frame 600A, 600B may be provided inside the module case 300 and configured to cover the front side or the rear side of the cell assembly 100. The bus bar frame 600A, 600B supports the bus bars 700 connected to the electrode leads 112 respectively provided to the plurality of battery cells 110. The bus bar frame 600A, 600B may be made of a material having electrical insulation properties, such as a plastic material.

The bus bar frame 600A, 600B may include a front bus bar frame 600A and a rear bus bar frame 600B.

In particular, as shown in FIG. 7, the rear bus bar frame 600B has a through hole H2, and the front bus bar frame 600A does not have a through hole H2. According to this embodiment, venting gas, flame, etc. may be more smoothly guided to be discharged in one direction, particularly toward the rear side of the module case 300.

The through hole H2 may be configured to communicate with the gas venting hole H1. The through hole H2 may be provided to at least partially face the gas venting hole H1. The gas venting hole H1 and the through hole H2 may be arranged along a substantially straight line.

According to this embodiment of the present disclosure, venting gas, flame, etc. may be discharged to the outside along a substantially straight line by the gas venting hole H1 and the through hole H2. As a result, the venting gas, flame, etc. may be discharged to the outside of the battery module 10 more quickly.

The bus bar frame 600A, 600B may have a lead slot 610. The lead slot 610 may be provided to allow at least a part of electrode leads 112 of the plurality of battery cells 110 to pass through. The lead slot 610 may be provided to allow the plurality of electrode leads 112 to pass through in the +Y-axis or -Y-axis direction (front and rear direction).

The lead slot 610 may be provided in plurality so that the plurality of lead slots 610 are spaced apart from each other along the stacking direction (X-axis direction) of the battery cells 110. At this time, the plurality of electrode leads 112 passing through the lead slots 610 may be bent and attached to the bus bar 700. The plurality of battery cells 110 whose electrode leads 112 are in contact with each other on the bus bar 700 may be electrically connected to each other.

The bus bar 700 may be provided between the plurality of lead slots 610. Thus, the bus bar 700 may be configured to be in direct contact with the electrode leads 112 passing through the lead slots 610. Specifically, the electrode leads 112 of the battery cells 110 pass through the lead slots 510 of the bus bar frame 600A, 600B and are drawn to the outside of the bus bar frame 600A, 600B, and the portions drawn out in this manner may be attached to the surface of the bus bar 700 by welding or the like.

The bus bar 700 may be made of a metal material such as copper, aluminum, nickel, etc. In addition, the bus bar 700 may be made in the form of a bar extending in the height direction.

The bus bar 700 may be attached to the outer surface of the bus bar frame 600A, 600B. For this purpose, the bus bar frame 600A, 600B may include a bus bar coupling portion 520. In addition, the bus bar 700 may be located at the inner side of the electrode lead 112. That is, the bus bar 700 may be located between the bent electrode lead 112 and the bus bar frame 600A, 600B.

The bus bar frame 600A, 600B may include a plurality of bus bar coupling portions 620. The bus bars 700 may be configured to be mounted to the bus bar coupling portions 620 one by one.

Referring to FIG. 7 again, a plurality of through holes H2 may be provided in the rear bus bar frame 600B. The plurality of through holes H2 may be arranged along at least one direction. For example, the plurality of through holes H2 may be arranged in a row along the height direction of the rear bus bar frame 600B. The through holes H2 may be provided to be elongated along the height direction of the bus bar frame 600B. In this case, the through holes H2 may be configured in a rib shape when the rear bus bar frame 600B is viewed from the front.

In addition, the plurality of through holes H2 may be arranged along the stacking direction of the battery cells 110. The through holes H2 may be provided at the left and right sides of the bus bar coupling portion 620. In this case, the through holes H2 may be located at both sides of each bus bar 700.

Also, some through holes H2 among the plurality of through holes H2 may be configured to be integrated with the lead slot 610. That is, the through holes H2 may be configured to allow at least some of the electrode leads 112 of the plurality of battery cells 110 to pass through.

Meanwhile, the battery module according to an embodiment of the present disclosure includes a fireproof cover member 400 and a block member 500 to suppress thermal runaway propagation of the battery cells and to more smoothly guide gas, etc. to the rear side of the module case.

The fireproof cover member 400 covers the top end of the cell assembly 100 and is responsible for suppressing upward discharge of gas generated in the battery cell 110. The fireproof cover member 400 may be made of a material with excellent fire resistance. For example, the fireproof cover member 400 may be implemented with a flame-retardant urethane foam, polyurethane foam, or silicone foam pad.

The fireproof cover member 400 may be preferably made of a compressible material so as to completely fill the space between the top end of the cell assembly 100 and the upper surface of the module case 300. For example, the fireproof cover member 400 may be configured to be pressed toward the top end of the cell assembly 100 by the top plate 312 described above, thereby filling the space between the top end of the cell assembly 100 and the top plate 312.

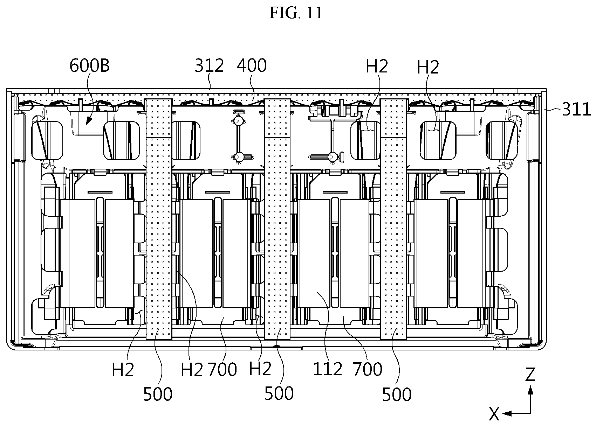

According to this embodiment, when a thermal event occurs in a battery cell, upward gas discharge from the battery cell may be suppressed. In addition, as shown in FIG. 11, since the empty space between the top plate 312 of the module case 300 and the top end of the cell assembly 100 disappears, thermal energy propagation between the battery cells through the top end of the cell assembly 100 may be prevented. In detail, a gap may exist between the top end of the cell assembly 100 and the upper surface of the module case 300 due to a difference in surface roughness. This gap may become a passage for gas or flame to move within the module case 300. If the gas or flame flows along the gap, thermal energy propagation between the battery cells 110 may be accelerated. In addition, the presence of the gap may also impede directional venting toward the rear side of the module case 300. However, according to an embodiment of the present disclosure, the fireproof cover member 400 may eliminate the gap, thereby suppressing heat energy propagation through the top end of the cell assembly 100. In addition, the fireproof cover member 400 may also be advantageous for upward discharge of the gas generated in the battery cell and directional venting of the gas toward the rear side of the module case 300.

The block member 500 may be configured to guide gas or flame to the gas venting hole H1. The block member 500 may be provided inside the module case 300, as shown in FIG. 5. Specifically, the block member 500 may be provided between one side of the module case 300, which has the gas venting hole H1, and the cell assembly 100. In addition, the block member 500 may be configured to partition the space formed between the module case 300 and the cell assembly 100, thereby restricting lateral movement of gas flowing in the space and guiding the gas toward the gas venting hole H1.

According to this embodiment of the present disclosure, when a thermal event occurs in a battery cell 110 within the battery module 10, venting gas or the like may be discharged only in one target direction, such as the direction toward the gas venting hole H1, as indicated by the arrow in FIG. 5. That is, since the outer periphery of the block member 500 except for the gas venting hole H1 is blocked, directional venting of the venting gas may be more effectively induced toward the gas venting hole H1.

Thus, according to this embodiment, the venting gas may be quickly guided to the gas venting hole H1 and discharged to the outside. That is, according to this embodiment of the present disclosure, heat accumulation inside the battery module 10 may be prevented or suppressed. Thus, the safety and reliability of the battery module 10 may be guaranteed.

The block member 500 may be configured to partition the space through which gas or the like may flow into a plurality of spaces. The block member 500 may be configured to suppress the venting gas from moving to an adjacent venting space.

According to this embodiment of the present disclosure, since the space through which gas, etc. may flow is partitioned, when a thermal event occurs in a battery cell 110, the venting gas, flame, etc. is prevented from being transferred to an adjacent battery cell 110, so that the propagation of thermal runaway between the battery cells 110 may be effectively prevented or delayed.

The block member 500 may include an elastic material such as silicone. As a result, the block member 500 may be compressed by components within the battery module 10. According to this embodiment of the present disclosure, the space through which gas or the like may flow is more reliably sealed, so that directional venting toward the gas venting hole H1 may be more effectively induced. In addition, the block member 500 may have at least one of flame retardancy and fire resistance.

The fireproof cover member 400 and the block member 500 may be configured as one piece.

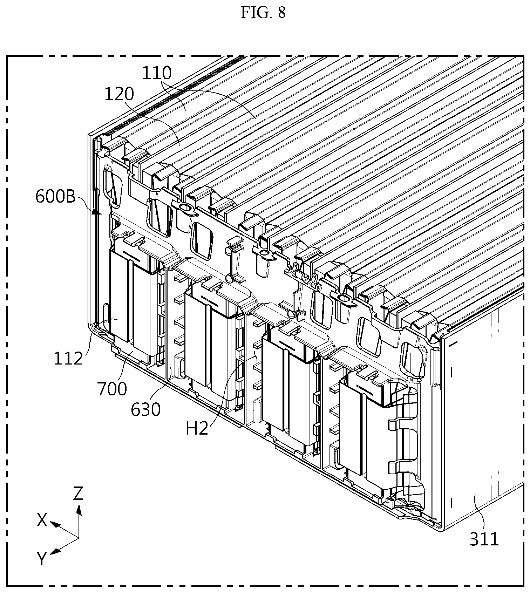

The block member 500 may be provided at one end of the fireproof cover member 400. Here, the one end of the fireproof cover member 400 refers to a side facing the rear side of the module case 300. The assembly structure of the fireproof cover member 400 and the block member 500 will be briefly examined with reference to FIGS. 8 to 11 as follows.

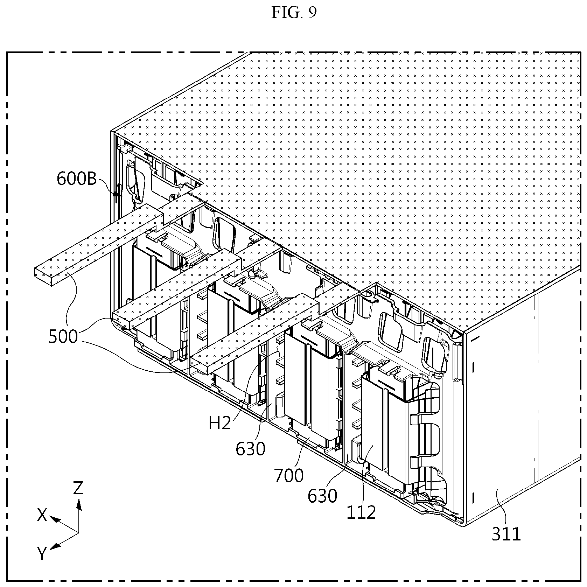

As shown in FIG. 8, the cell assembly 100 and the bus bar frames 600A and 600B may be assembled and stored in the U-frame 311, explained above. Then, as shown in FIG. 9, the fireproof cover member 400 is placed at the top end of the cell assembly 100. At this time, the block member 500 may be provided in a state parallel to the fireproof cover member 400.

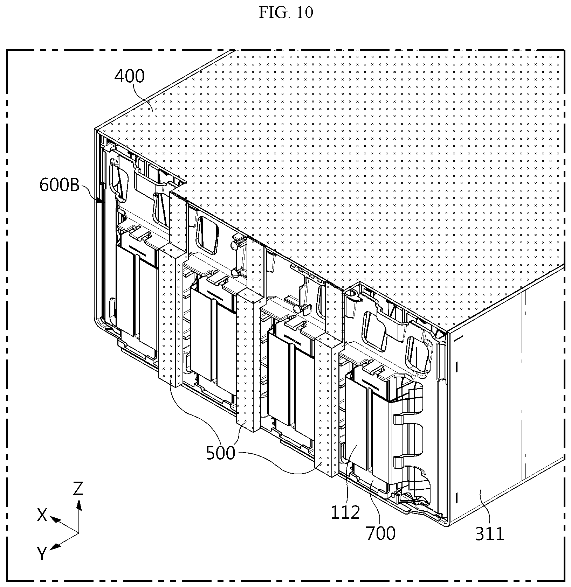

After that, as shown in FIG. 10, the block member 500 is folded and assembled to the rear bus bar frame 600B. At this time, the block member 500 may be in a form that is bent and extended from one end of the fireproof cover member 400. Then, the fireproof cover member 400 is pressed with the aforementioned top plate 312, and both edges of the top plate 312 and the top end of the U-frame 311 are welded and fixed. Then, the rear end cover 630 is assembled to the case body 310. Accordingly, the block member 500 may be located in the space between the rear bus bar frame 600B and the rear end cover 330.

The block member 500 may be configured to suppress gas from moving along the stacking direction (X direction) of the battery cell 110 in the space between the rear bus bar frame 600B and the rear end cover 330. That is, the block member 500 may be provided at the outside of the rear bus bar frame 600B and may be provided to block lateral movement of gas passing through the through hole H2 of the rear bus bar 600B.

According to this embodiment, since the block member 500 may suppress the movement of venting gas and the like along the stacking direction of the battery cells 110, propagation of heat may be suppressed or prevented between the battery cells 110. In addition, since the block member 500 may guide the venting gas and the like toward the gas venting hole H1, directional venting of the venting gas and the like may be more reliably induced.

More specifically, the block member 500 may be provided in plurality. The plurality of the block members 500 may be arranged to be spaced apart from each other along the stacking direction of the battery cells 110, namely the right and left direction of the rear bus bar frame 600B. For example, as in the embodiments shown in FIGS. 10 and 11, the block member 500 may be provided between the bus bars 700 and the electrode leads 112 connected thereto. In other words, the block member 500 may be arranged between the bus bars without blocking the through hole H2.

In addition, the plurality of block members 500 may be positioned not to block the gas venting holes H1 of the rear end cover 330 and may be spaced apart from each other in the right and left direction at a predetermined interval. That is, the block members 500 may be positioned at offset positions from the gas venting holes H1.

According to this embodiment of the present disclosure, when a thermal event occurs in a certain battery cell 110, lateral movement of the venting gas, flame, etc. may be restricted by the block member 500 in the space between the rear bus bar frame 600B and the rear end cover 330. As a result, the gas, flame, etc. may be guided and discharged to the rear side of the module case 300 through the gas venting hole H1 adjacent to the certain battery cell 110 where the thermal event occurs. As a result, the venting gas, etc. of the battery cell 110 where the thermal event occurs may be suppressed or prevented from moving to other battery cells 110 and spreading heat.

In addition, the block member 500 may be configured to be elongated in the height direction of the rear bus bar frame 600B. That is, the height of the block member 500 may be configured to correspond to the height of the rear bus bar frame 600B.

According to this embodiment of the present disclosure, the block member 500 may more reliably partition the space along the height direction of the rear bus bar frame 600B. By doing so, it is possible to more reliably prevent the venting gas and the like from moving to other spaces where adjacent battery cells 110 are located.

In addition, the block member 500 may include an elastic material. Also, the block member 500 may include a material with high heat resistance. Also, the block member 500 may include a material with high flame resistance. Also, the block member 500 may include a material with electrical insulation properties. For example, the block member 500 may include a silicone material.

Accordingly, the block member 500 may be configured to be pressurized in the front and rear direction by the rear bus bar frame 600B and the rear end cover 330. In this case, the block member 500 may be in close contact with the rear bus bar frame 600B and the rear end cover 330, thereby more reliably preventing venting gas, flame, etc. from leaking out through the gap.

In addition, according to this embodiment of the present disclosure, bending deformation of the block member 500 may be suppressed by fixing the block member 500 to the rear bus bar frame 600B and the rear end cover 330. Accordingly, even if a thermal event occurs, the possibility of high-temperature high-pressure venting gas or flame being transferred to another space while pushing the block member 500 may be reduced.

Meanwhile, the block member 500 may be configured such that at least a portion of the rear bus bar frame 600B is inserted therein.

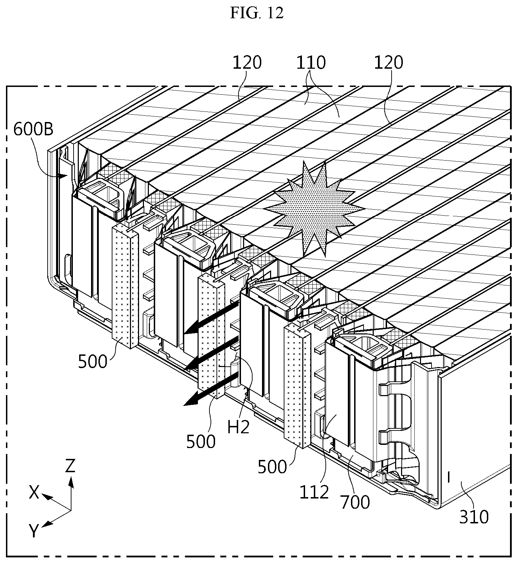

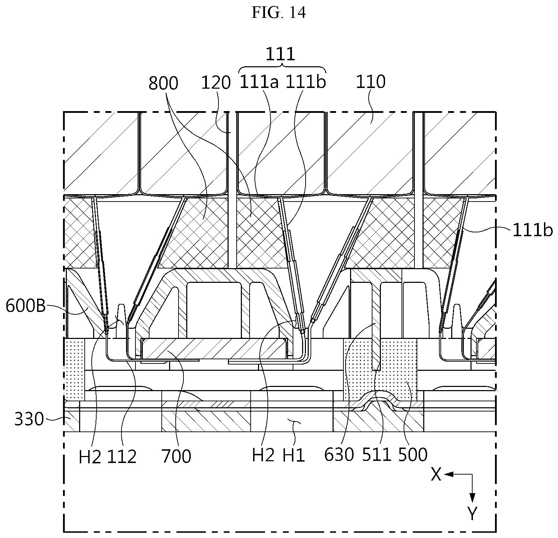

Specifically, referring to FIGS. 12 to 14, the rear bus bar frame 600B may further include a block coupling portion 630. The block coupling portion 630 may be provided in a number corresponding to the number of the block members 500. The block coupling portion 630 may be configured such that at least a portion of an outer surface of the rear bus bar frame 600B protrudes outward. The block coupling portion 630 may protrude further outward than the outer surface of the bus bar coupling portion 620. The block coupling portion 630 may be provided between adjacent through holes H2.

The block member 500 may be configured to be coupled to the block coupling portion 630 by fitting.

For example, the block member 500 may have an insert groove 511 at the rear surface. The insert groove 511 may be provided in the form of a groove formed by recessing at least a portion of the block member 500. By fitting the block coupling portion 630 into the insert groove 511, the block member 500 may be fixed to the rear bus bar frame 600B.

According to this embodiment of the present disclosure, the adhesion and fixation of the block member 500 to the rear bus bar frame 600B may be stably secured. Accordingly, the space between the rear bus bar frame 600B and the rear end cover 330 may be more reliably and stably partitioned by the block member 500, and lateral movement of gas or flame may be prevented in the space.

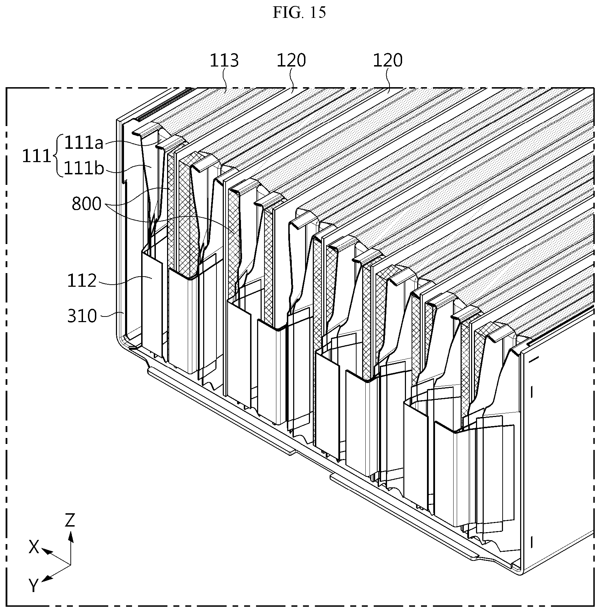

Referring to FIGS. 15 to 17, the battery module according to an embodiment of the present disclosure may further include a vent blocking block 800.

The vent blocking block 800 may be provided in the space between the cell assembly 100 and the bus bar frame 600A, 600B. The vent blocking block 800 may be configured to induce venting gas, flame, etc. to be discharged in one direction, namely toward the rear side of the battery module 10. In particular, the vent blocking block 800 may be configured to suppress venting gas, flame, etc. from being discharged in a direction other than the rear direction, particularly toward the front side.

In this embodiment, the vent blocking block 800 is provided at both the front and rear sides of the cell assembly 100, but may be omitted at the rear side of the cell assembly 100 and provided only at the front side of the cell assembly 100.

Specifically, the vent blocking block 800 may be arranged at the front and/or rear side of the accommodation portion 111a of the battery cell 110. In other words, due to a difference in thickness of the cell terrace 111b compared to the accommodation portion 111a of the battery cell 110, empty spaces exist around the cell terrace 111b, and the vent blocking block 800 may be interposed in the empty spaces to fill the empty spaces. In addition, the vent blocking block 800 may be configured to pressurize the side surface of the cell terrace 111b of the pouch case 111.

In addition, the vent blocking block 800 may be configured to be elongated along the height direction of the battery cell 110. For example, the vent blocking block 800 may be configured to extend as much as the height of the accommodation portion 111a of the battery cell 110.

The vent blocking block 800 may include an elastic material. Also, the vent blocking block 800 may include a material with high heat resistance. Also, the vent blocking block 800 may include a material with high flame resistance. Also, the vent blocking block 800 may include a material with electrical insulation properties. For example, the vent blocking block 800 may include a silicone material.

The vent blocking block 800 may be provided in plurality. The plurality of vent blocking blocks 800 may be arranged along the stacking direction of the battery cells 110, namely the right and left direction. The vent blocking block 800 may be provided between the battery cells 110. The vent blocking block 800 may be provided on at least one side of the cell terrace 111b. That is, at least one side surface of the vent blocking block 800 may be configured to contact the cell terrace 111b. In other words, the vent blocking block 800 may be configured to contact the front and/or rear sides of the accommodation portion 111a and at the same time contact the cell terrace 111b. According to this embodiment of the present disclosure, the vent blocking block 800 may fix the cell terrace 111b.

The vent blocking block 800 may be provided at both sides of the barrier member 120. The vent blocking block 800 may be configured to compress the barrier member 120 from both sides. That is, the vent blocking block 800 may compress the barrier member 120 in the right and left directions. As a result, the position of the barrier member 120 may be fixed. In addition, the vent blocking block 800 may prevent the barrier member 120 from being bent and deformed.

The vent blocking block 800 may be arranged to face the inner side of the bus bar frame 600A, 600B. In this case, even if the bus bar frame 600A, 600B moves toward the cell assembly 100 due to external impact, etc., the vent blocking block 800 absorbs the impact, thereby preventing the battery cells 100 from being damaged.

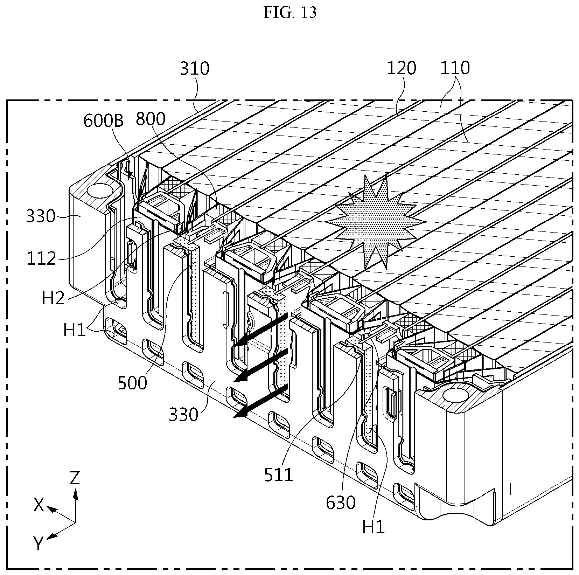

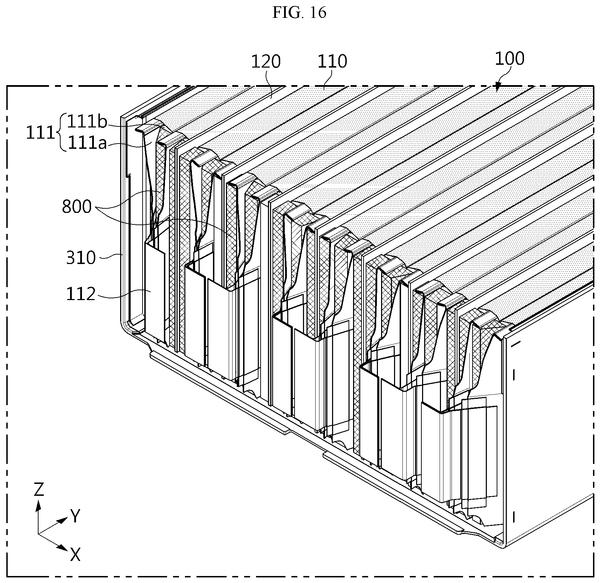

Meanwhile, as shown in FIGS. 13 to 15, some of the cell terraces 111b of the plurality of battery cells 110 located at the rear side of the cell assembly 100 may be configured to be pressed by the vent blocking block 800, and as shown in FIGS. 16 to 17, all of the cell terraces 111b of the plurality of battery cells located at the front side of the cell assembly 100 may be configured to be compressed by the vent blocking block 800.

That is, at the front side of the battery module 10, the vent blocking block 800 may be provided between the cell terraces 111b of the battery cells 110 to provide a force that compresses the cell terraces 111b. In other words, the cell terraces 111b located at the front side of the cell assembly 100 may be compressed in the right and left direction by the vent blocking block 800. However, the cell terraces 111b located at the rear side of the cell assembly 100 may be configured not to be completely compressed in the right and left direction by the vent blocking block 800.

In this case, when the internal pressure of the battery cell 110 increases, the rear cell terrace 111b may be opened prior to the front cell terrace 111b. As a result, gas discharge through the front cell terrace 111b is suppressed, and gas may be discharged through the rear cell terrace 111b of the battery cell 110.

In this way, according to the embodiments of the present disclosure described above, when a thermal event occurs in the battery cell 110, gas or flame may be induced to be discharged toward the rear side of the cell assembly 100. In addition, heat accumulation or propagation within the battery module 10 due to gas, flame, etc. may be minimized, and the gas, flame, etc. may be smoothly discharged to the rear side of the battery module 10.

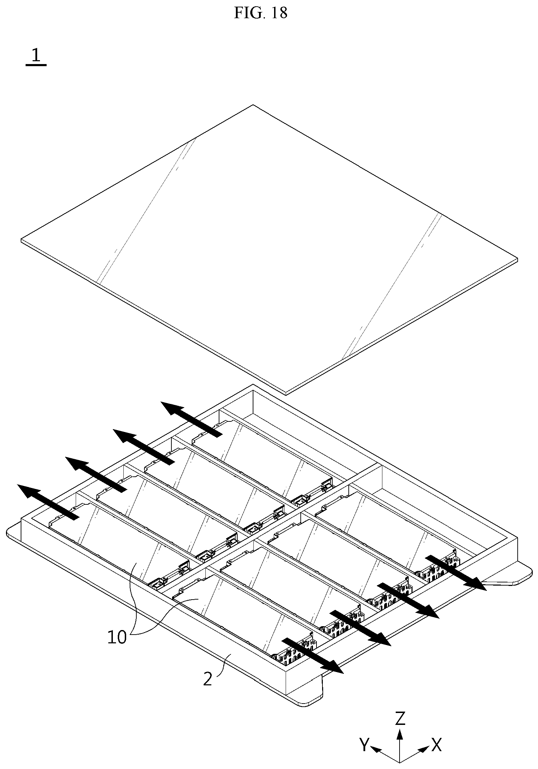

FIG. 18 is a schematic perspective view showing a battery pack including the battery module according to an embodiment of the present disclosure.

Referring to FIG. 18, a battery pack 1 according to an embodiment of the present disclosure may include one or more battery modules 10 according to an embodiment of the present disclosure as described above. The battery pack 1 according to the present disclosure may further include a pack case 2 for accommodating a BMS (Battery Management System) for integrated control of charging and discharging of one or more battery modules 10, a current sensor, a fuse, and the like, along with the components described above.

Referring to FIG. 18, a plurality of battery modules 10 may be arranged so that the front side equipped with the module terminal 200 faces the inside of the pack case 2. Also, the rear side of the battery module 10 where the gas venting hole H1 is located may be arranged to face the outside of the pack case 2.

In this case, when a thermal event occurs in the battery cell 110 inside the battery module 10, directional venting of the venting gas, flame, etc. is performed toward the rear side of the battery module 10 to prevent heat from being concentrated inside the pack case 2. In addition, the venting gas, flame, etc. discharged to the rear side of the battery module 10 is adjacent to the outer wall of the pack case 2, and thus may be more easily discharged to the outside of the battery pack 1. For reference, although not shown, a gas exhaust port may be provided in the outer wall of the pack case 2.

In addition, according to this embodiment of the present disclosure, by minimizing venting gas, flame, etc. from being directed toward the module terminal 200, heat propagation to other adjacent battery modules 10 may be suppressed or prevented. Accordingly, events resulting from thermal runaway of the battery pack 1 including a plurality of battery modules 10, such as fire or explosion, may be prevented or delayed.

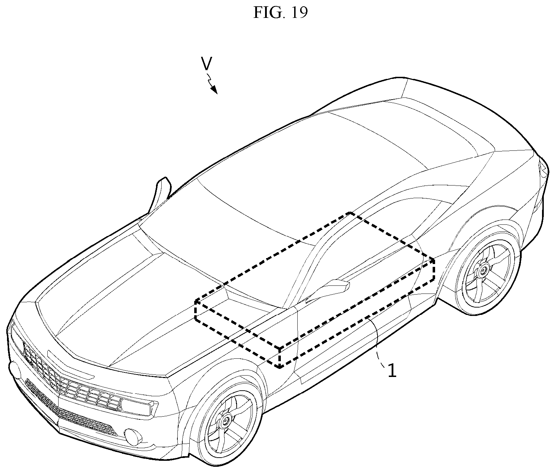

FIG. 19 is a perspective view schematically showing a vehicle including the battery pack according to an embodiment of the present disclosure.

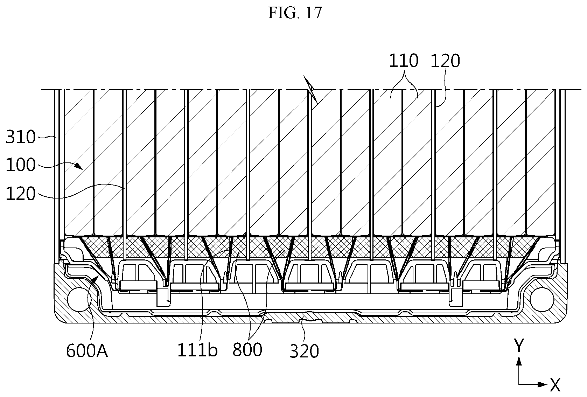

Referring to FIG. 17, the vehicle V according to an embodiment of the present disclosure may include one or more battery packs 1 according to an embodiment of the present disclosure or one or more battery modules 10 according to an embodiment of the present disclosure. The vehicle V according to the present disclosure may be, for example, an electric vehicle, a hybrid electric vehicle, or a plug-in hybrid vehicle. The vehicle V includes a four-wheel vehicle and a two-wheel vehicle. The vehicle V operates by receiving power from the battery pack 1 or the battery module 10 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Also, although terms indicating directions such as upward, downward, left, right, front, and rear are used in this specification, it is obvious to those skilled in the art that these terms are only for convenience of explanation and may vary depending on the location of the target object or the location of the observer.

## Claims

1. A battery module comprising:
a cell assembly having a plurality of battery cells;
a module case configured to accommodate the cell assembly and having a gas venting hole provided at one side to allow gas generated from the battery cell to be discharged to the outside;
a module terminal electrically connected to the cell assembly and exposed to the other side of the module case;
a fireproof cover member configured to cover a top end of the cell assembly to suppress upward discharge of the gas from the battery cells; and
a block member configured to partition a space between the cell assembly and one side of the module case to guide the gas toward the gas venting hole.

2. The battery module according to claim 1,
wherein the fireproof cover member and the block member are formed as one piece.

3. The battery module according to claim 1,
wherein the block member is bent and extended from one end of the fireproof cover member.

4. The battery module according to claim 1,
wherein the fireproof cover member is made of compressible material to fill a space between the top end of the cell assembly and an upper surface of the module case.

5. The battery module according to claim 1, further comprising:
a bus bar connected to electrode leads respectively provided to the plurality of battery cells; and
a bus bar frame provided to support the bus bar and cover a front side or a rear side of the cell assembly.

6. The battery module according to claim 5,
wherein the bus bar frame covering the rear side of the cell assembly faces one side of the module case and has a plurality of through holes through which the gas passes.

7. The battery module according to claim 6,
wherein the block member is provided at an outer side of the bus bar frame and is configured to block gas passing through the through hole from moving in a direction in which the battery cells are stacked in a space between the bus bar frame and one side of the module case.

8. The battery module according to claim 6,
wherein the block member is provided in plurality so that the plurality of block members are arranged to be spaced apart along a direction in which the battery cells are stacked.

9. The battery module according to claim 6,
wherein the block member is configured to be elongated in a height direction of the bus bar frame.

10. The battery module according to claim 6,
wherein the block member is provided to be coupled by fitting to a block coupling portion formed to protrude from the bus bar frame.

11. The battery module according to claim 6, further comprising:
a vent blocking block disposed in a space between the cell assembly and the bus bar frame,
wherein the battery cell is a pouch-type battery cell, and
wherein the vent blocking block is provided on at least one side of a cell terrace from which the electrode leads are drawn out of the battery cell.

12. The battery module according to claim 11,
wherein the vent blocking block is configured to pressurize a side surface of the cell terrace.

13. The battery module according to claim 11,
wherein the vent blocking block is provided in plurality at a front side and a rear side of the cell assembly, respectively, and
wherein the cell terraces of the plurality of battery cells located at the front side of the cell assembly are all compressed by the vent blocking block, and some of the cell terraces of the plurality of battery cells located at the rear side of the cell assembly are compressed by the vent blocking block.

14. A battery pack comprising the battery module according to any one of claims 1 to 13.

15. A vehicle comprising the battery pack according to claim 14.
